# EUROPÄISCHE PATENTSCHRIFT

(11) **EP 1 635 091 B1**
(45) Veröffentlichungstag und Bekanntmachung des Hinweises auf die Patenterteilung: **05.03.2008**
(21) Anmeldenummer: 04104218.5
(22) Anmeldetag: 02.09.2004
(51) Int. Cl.: F16H 61/02, B60W 10/02, B60W 10/10

(54) **Hydraulische Steuerungsvorrichtung für ein automatisiertes Doppelkupplungsgetriebe**
Hydraulic control apparatus for an automated twin clutch transmission
Dispositf de commande hydraulique pour une boîte de vitesses à double embrayage

(43) Veröffentlichungstag der Anmeldung: 15.03.2006
(73) Patentinhaber: Getrag Ford Transmissions GmbH, 50725 Köln (DE)
(72) Erfinder: Möhlmann, Reinhard, 50739, Köln (DE); Leibbrandt, Martin, 50181 Bedburg (DE); Eggert, Ulrich, 41751 Viersen (DE)

(56) Entgegenhaltungen:
- EP-A2- 1 150 040
- EP-A2- 1 400 733
- DE-C1- 4 117 736

## Beschreibung

Die Erfindung betrifft eine hydraulische Steuerungsvorrichtung für ein automatisiertes Doppelkupplungsgetriebe sowie ein Verfahren zum Steuern des Getriebes mit der hydraulischen Steuerungsvorrichtung.

Doppelkupplungsgetriebe sind seit längerem bekannt und werden bevorzugt in Kraftfahrzeugen eingesetzt. Ein Doppelkupplungsgetriebe weist im allgemeinen zwei Teilgetriebe auf, denen jeweils eine separate Kupplung und eine Gruppe von Gängen zugeordnet sind. Aufgrund des erheblichen mechanischen Aufwands, die zwei Kupplungen zu betätigen sowie die Gänge der beiden Teilgetriebe zu schalten, sind Doppelkupplungsgetriebe zumeist automatisiert ausgebildet, d. h., dass sowohl die Betätigung der Kupplungen als auch das Schalten der Gänge über zugeordnete Hilfsantriebe erfolgt, die beispielsweise in Form von hydraulisch beaufschlagten Stellgliedern ausgebildet sein können, die durch eine hydraulische Steuerungsvorrichtung angesteuert werden.

Bekannte hydraulische Steuerungsvorrichtungen für Doppelkupplungsgetriebe weisen meist aufwendige Steuermechanismen mit einer Vielzahl von Ventilen auf. So ist beispielsweise aus der DE 101 34 115 A1 bekannt, einer ersten und zweiten Kupplung jeweils ein Stromregelventil und den Stellgliedern zum Schalten der Gänge jeweils ein Druckregelventil zuzuordnen. In der DE 41 17 736 C1 ist offenbart, zwischen einem ersten und zweiten Druckregler einerseits und der ersten und zweiten Kupplung sowie den Stellgliedern zum Schalten der Gänge andererseits eine Umschaltvorrichtung vorzusehen, wodurch ein geregelter Druck, der durch die Druckregler erzeugt werden, entweder auf die Kupplungen oder auf eines der Stellglieder geschaltet wird. Durch dieses Umschalten lässt sich die Anzahl der notwendigen Regelventile im Vergleich zu einer Anordnung gemäß der DE 101 34 115 A1 reduzieren, die für die Kupplungen und für die Stellglieder zum Ein-/Auslegen der Gänge) jeweils ein Regelventil vorsieht.

Bei der gattungsgemäßen Steuervorrichtung gemäß der DE 41 17 736 C1 kann nur ein Druckregelventil mit den Stellgliedern zum Schalten der Gänge durch die Umschaltvorrichtung verbunden werden kann, während das andere Druckregelventil nur mit entweder der einen Kupplung oder mit der anderen Kupplung verbunden werden kann. Fällt das eine Druckregelventil aus, ist ein Schalten der Gänge nicht mehr möglich ist.

Der Erfindung liegt die Aufgabe zugrunde, eine hydraulische Steuerungsvorrichtung für ein automatisiertes Doppelkupplungsgetriebe bereitzustellen, die einfach und kostengünstig aufgebaut ist und auch bei Ausfall einer ihrer Komponenten möglichst alle notwendigen Funktionen zum Schalten der Gänge und zum Betätigen der Kupplungen gewährleistet.

Die der Erfindung zugrundeliegende Aufgabe wird durch die Steuerungsvorrichtung gemäß Anspruch 1 bzw. das Verfahren gemäß Anspruch 10 gelöst. Die Steuerungsvorrichtung zeichnet sich dadurch aus, dass das erste Umschaltventil in einer ersten Stellung A_{I} das erste Regelventil mit der ersten Kupplung verbindet und von dem Schaltsystem trennt und in einer Stellung B_{I} das erste Regelventil mit dem Schaltsystem verbindet und von der ersten Kupplung trennt, und dass das zweite Umschaltventil in einer Stellung A_{II} das zweite Regelventil mit der zweiten Kupplung verbindet und von dem Schaltsystem trennt und in einer Stellung B_{II} das zweite Regelventil mit dem Schaltsystem verbindet und von der zweiten Kupplung trennt.

Durch die erfindungsgemäße Anordnung der Regelventile und der Umschaltventile lässt sich durch entsprechende Stellungen B_{I}, B_{II} das Schaltsystem zum Schalten der Gänge mit beiden Regelventilen verbinden. Dadurch wird die Möglichkeit gegeben, dass sowohl das erste Regelventil als auch das zweite Regelventil einen geregelten Druck oder geregelten Volumenstrom für das Schaltsystem zur Verfügung stellen kann. Die erfindungsgemäße Steuerungsvorrichtung ermöglicht somit ein Schalten der Gänge, unabhängig davon, welches der beiden Regelventile ausfällt.

Zudem weist die erfindungsgemäße Steuerungsvorrichtung den Vorteil auf, dass durch lediglich zwei Regelventile sowohl die beiden Kupplungen betätigt als auch die Gänge geschaltet werden können. Dadurch lassen sich die Kosten für die Herstellung einer derartigen Steuerungsvorrichtung niedrig halten, da Regelventile, wie ein Druckregler oder ein Stromregler, im Vergleich zu Schaltventilen teurer sind.

In einem bevorzugten Ausführungsbeispiel ist zwischen dem ersten Regelventil bzw. dem zweiten Regelventil und dem Schaltsystem ein Umschalter vorgesehen, der sicherstellt, dass das Schaltsystem entweder mit dem Druck/Volumenstrom des ersten Regelventils oder mit dem Druck/Volumenstrom des zweiten Regelventils beaufschlagt wird. Dieser Umschalter dient dazu, die Verbindung zwischen dem Schaltsystem und dem Regelventil zu trennen, das (augenblicklich) nicht für die Ansteuerung des Schaltsystems vorgesehen ist oder aufgrund einer Störung die Ansteuerung nicht übernehmen kann. Die Ansteuerung des Schaltsystems wird daher nicht durch eine ungewollte Überlagerung von zwei Regelventilen, von denen eines möglicherweise defekt ist, beeinträchtigt.

Vorzugsweise ist der Umschalter als Wechselventil ausgebildet. Das Wechselventil weist dabei einen ersten und zweiten Eingang sowie einen Ausgang auf, wobei der erste Eingang mit dem ersten Regelventil und der zweite Eingang mit dem zweiten Regelventil verbunden ist. Der Ausgang des Umschalters ist mit dem Schaltsystem verbunden. Das Wechselventil stellt eine Verbindung zwischen Ausgang und dem Eingang her, an dem ein höherer Druck anliegt, während es gleichzeitig die Verbindung zwischen Ausgang und dem Eingang mit niedrigerem Druck trennt.

In einem bevorzugten Ausführungsbeispiel ist in der Stellung B_{I} des ersten Umschaltventils und in der Stellung B_{II} des zweiten Umschaltventils das erste Regelventil mit der zweiten Kupplung und das zweite Regelventil mit der ersten Kupplung verbunden. Dadurch lassen sich die erste und die zweite Kupplung weiterhin betätigen, auch wenn eines der Regelventile ausgefallen ist. Ist beispielsweise das erste Regelventil ausgefallen, kann die erste Kupplung über das zweite Regelventil angesteuert werden, soweit sich das erste und zweite Umschaltventil jeweils in der Stellung B_{I}, B_{II} befinden. Die zweite Kupplung lässt sich weiterhin ebenfalls durch das zweite Regelventil betätigen, wenn es in die Stellung A_{II} geschaltet wird. Davon unbenommen kann das zweite Regelventil weiterhin die Steuerung des Schaltsystems übernehmen, wenn das zweite Umschaltventil sich in die Stellung B_{II} befindet. Zwar ist bei Ausfall eines Regelventils ein Schalten ohne Zugkraftunterbrechung nicht mehr möglich, jedoch lässt sich das Doppelkupplungsgetriebe noch in jeden Gang schalten und in diesem Gang auch betreiben.

Vorzugsweise weist die Steuerungsvorrichtung ein Gruppenauswahl auf, durch die die Regelungseinheit entweder mit einer ersten, dem ersten Teilgetriebe zugeordneten Gruppe von Aktuatoren bzw. Stellgliedern oder mit einer zweiten, dem zweiten Teilgetriebe zugeordneten Gruppe von Aktuatoren bzw. Stellgliedern verbunden wird. Diese Gruppenauswahl kann ein Ventil mit vorzugsweise zwei Stellungen umfassen, wobei in einer ersten Stellung der geregelte Druck/Volumenstrom der Regelungseinheit auf die erste Gruppe und in einer zweiten Stellung der geregelte Druck/Volumenstrom auf die zweite Gruppe von Aktuatoren geschaltet wird. Gleichzeitig wird in der ersten Stellung des Ventils der Gruppenauswahl die Verbindung zwischen Regelungseinheit und der zweiten Gruppe von Aktuatoren getrennt. Analog wird in der zweiten Stellung die erste Gruppe von Aktuatoren von der Regelungseinheit getrennt.

Des weiteren kann eine Aktuatorenauswahl vorgesehen sein, durch das die Regelungseinheit mit einem der Aktuatoren aus der ersten oder aus zweiten Gruppe verbunden wird. Befinden sich beispielsweise in einer Gruppe zwei Aktuatoren, so kann die Aktuatorenauswahl ein Ventil mit zwei Schaltstellungen beinhalten, so dass jeweils ein Aktuator ausgewählt und der andere von der Regelungseinheit getrennt ist.

Wenn die Stellglieder zum Schalten der Gänge als doppelseitig ansteuerbare Schaltzylinder ausgebildet sind, ist eine Kammerauswahl vorgesehen, durch die die Regelungseinheit entweder mit einer ersten Kammer oder mit einer zweiten Kammer des Schaltzylinders verbunden wird. Durch den doppelseitig ansteuerbaren Schaltzylinder lässt sich eine damit verbundene Schaltgabel in zwei entgegengesetzte Richtungen exakt steuern, so dass sie aus einer mittleren Neutralstellung heraus zwei Gänge einlegen kann. Die Kammerauswahl kann Ventile aufweisen, wobei diese vorzugsweise über ein gemeinsames Signalelement angesteuert werden.

Die Gruppenauswahl, die Aktuatorenauswahl sowie die Kammerauswahl mit ihren dazugehörigen Ventilen sind vorzugsweise in Reihe geschaltet. Durch eine derartige Reihenschaltung lassen sich beispielsweise bei vier vorhandenen, doppelseitig ansteuerbaren Schaltzylindern die acht einzelnen Kammern der Schaltzylinder einzeln ansteuern, wenn die in Reihe geschalteten Ventile (Ventil der Gruppenauswahl, Ventil der Aktuatorenauswahl und Ventil der Kammerauswahl) jeweils zwei Schaltstellungen einnehmen können.

In einem bevorzugten Ausführungsbeispiel ist die Gruppenauswahl durch ein Signalelement ansteuerbar, das ebenso zur Ansteuerung wenigstens eines der beiden Umschaltventile dient. Dadurch ist es möglich, dass das Ventil der Gruppenauswahl mit dem gleichen Signal geschaltet wird, das zum Schalten eines der beiden Umschaltventile verwendet wird. Soll beispielsweise die zweite Kupplung geöffnet werden, wird durch ein Signal des Signalelements das zweite Umschaltventil auf die Stellung B_{II} geschaltet. Aufgrund der geöffneten Kupplung ist das ihr zugeordnete zweite Teilgetriebe drehmomentfrei. Gleichzeitig wird durch das Signal das Ventil der Gruppenauswahl betätigt, die dann die Gruppe der Aktuatoren auswählt, die dem zweiten Teilgetriebe zugeordnet sind. Die Gänge des zweiten Teilgetriebes lassen sich nun einlegen oder auslegen. In diesem Ausführungsbeispiel wird durch die gleichzeitige Nutzung des Signals für wenigstens ein Umschaltventil und für das Ventil der Gruppenauswahl die Gefahr ausgeschlossen, dass in einem unter Last stehenden Teilgetriebe Gänge geschaltet werden.

Die Schaltreihenfolge und die Schaltlogik innerhalb der erfindungsgemäßen Steuerungsvorrichtung können beliebig variiert werden. Als günstig hat sich ein Verfahren zum Steuern der Doppelkupplungsgetriebes mit der Steuerungsvorrichtung gemäß den obigen Ausführungen erwiesen, bei dem vor dem Umschalten von der Stellung B_{I}, B_{II} auf die Stellung A_{I}, A_{II} des ersten oder des zweiten Umschaltventils der Druck des dem Umschaltventil zugeordneten Regelventils auf einen Wert eingestellt wird, der von der nachfolgenden Betätigung der Kupplung abhängt, die nach Umschalten auf die Stellung A_{I}, A_{II} des Umschaltventils mit dem Druck/Volumenstrom des Regelventils beaufschlagt wird. Dadurch wird die Zeit für eine Schaltsequenz auf ein Minimum reduziert, da bedingt durch die erfindungsgemäße Anordnung von Regelventil und Umschaltventil das Schaltsystem und die zu schließende Kupplung nacheinander betätigt werden.

Vor dem Umschalten von Stellung A_{I}, Aₗₗ auf B_{I}, B_{II} des ersten oder zweiten Umschaltventils kann die Kupplung über eine Reduzierung des Drucks des dem Umschaltventil zugeordneten Druckventils geöffnet werden. Somit kann die Kupplung getrennt werden, ohne dass das entsprechende Umschaltventil geschaltet werden muss. Natürlich kann in Abhängigkeit vom Einzelfall die Kupplung weiterhin über das Schalten eines Umschaltventils getrennt werden.

Anhand der in den Figuren dargestellten Ausführungsbeispiele wird die Erfindung näher erläutert. Es zeigen:
- Figur 1: ein erstes Ausführungsbeispiel der Erfindung in schematischer Darstellung;
- Figur 2: ein Blockschaltbild einer bevorzugten Umsetzung des Ausführungsbeispiels der Figur 1; und
- Figur 3: einen Teil eines weiteren Ausführungsbeispiels, das gegenüber dem Ausführungsbeispiel der Figur 2 eine modifizierte Umschaltvorrichtung aufweist.

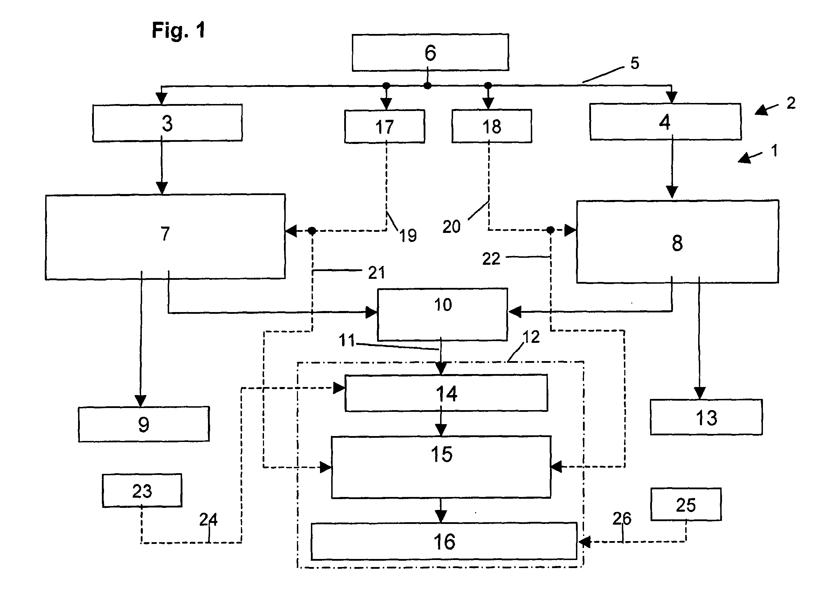

Figur 1 zeigt in schematischer Darstellung eine erfindungsgemäße hydraulische Steuerungsvorrichtung, die in ihrer Allgemeinheit mit 1 bezeichnet wird. Die Steuerungsvorrichtung 1 umfasst eine Regelungseinheit 2 mit einem ersten Druckregelventil beziehungsweise Druckregler 3 und einem zweiten Druckregler 4. Eingangsseitig sind die beiden Druckregler 3, 4 sind an einer Sammelleitung 5 verbunden, auf die ein Betriebsdruck 6 gelegt ist. Dem ersten Druckregler 3 ist ein erstes Umschaltventil 7 und dem zweiten Druckregler 4 ein zweites Umschaltventil 8 zugeordnet. Durch das erste Umschaltventil 7 lässt sich der erste Druckregler 3 entweder mit einer ersten Kupplung 9 oder mit einem als Druckumschalter ausgebildeten Umschalter 10 verbinden, der über eine Leitung 11 mit einem Schaltsystem 12 verbunden ist. Mittels des zweiten Umschaltventils 8 lässt sich ein geregelter Druck des zweiten Druckreglers 4 entweder auf den Druckumschalter 10 oder eine zweite Kupplung 13 schalten.

Mit der Steuerungsvorrichtung 1 lässt sich ein Doppelkupplungsgetriebe mit zwei separaten Kupplungen (erste und zweite Kupplung 9, 13) sowie mit mehreren Stellgliedern steuern, durch die einzelne Gänge des Getriebes eingelegt oder ausgelegt werden können. Das Doppelkupplungsgetriebe umfasst ein erstes und zweites Teilgetriebe, die der ersten beziehungsweise zweiten Kupplung zugeordnet werden. Wird ein Druck auf einen Kupplungszylinder einer Kupplung gegeben, wird die Kupplung geschlossen, die ansonsten durch eine Federkraft offen gehalten wird. Im geschlossenen Zustand überträgt die Kupplung ein Drehmoment zwischen einer Antriebseinheit wie einen Verbrennungsmotor und dem zugehörigen Teilgetriebe.

Das Schaltsystem 12 umfasst eine Aktuatorauswahl 14, eine Gruppenauswahl 15 sowie eine Aktuatorkammerauswahl 16. Wie der Figur 1 zu entnehmen ist, sind die Aktuatorauswahl 14, die Gruppenauswahl 15 und die Aktuatorkammerauswahl 16 in Reihe geschaltet. Aufgrund der Reihenschaltung lässt sich eine bestimmte Kammer eines Aktuators einer Gruppe auswählen, sodass in diese ausgewählte Kammer ein Druckmedium mit einem modellierten Druck von einem der beiden Druckregler 3, 4 über den Druckumschalter 10 und über die Leitung 11 geleitet werden kann.

Zum Betätigen des ersten Umschaltventils 7 und des zweiten Umschaltventils 8 ist ein Signalelement 17 bzw. ein Signalelement 18 vorgesehen. Das Signalelement 17 leitet über eine Signalleitung 19 ein Signal oder ein Signaldruck an das erste Umschaltventil 7. Durch das Signal lässt sich das Umschaltventil 7 betätigen oder schalten. Das zweite Umschaltventil 8 wird durch ein Signal geschaltet, das von der Signaleinheit 18 erzeugt und über eine Signalleitung 20 geleitet wird.

Das Signalelement 17 ist über eine Signalleitung 21, die von der Signalleitung 19 abgeht, mit der Gruppenauswahl 15 verbunden. Das Signalelement 18 ist über eine Signalleitung 22 ebenfalls mit der Gruppenauswahl 15 verbunden. Aufgrund der Signalleitungen 21, 22 ist es möglich, dass durch Signale der Signalelemente 17, 18 die Gruppenauswahl 15 angesteuert wird. Ein gesondertes Signalelement für die Gruppenauswahl 15 ist daher nicht notwendig.

Die Aktuatorauswahl 14 wird über ein Signalelement 23 angesteuert, das über eine Signalleitung 24 mit der Aktuatorauswahl 14 verbunden ist. Die Aktuatorkammerauswahl 16 wird mittels eines Signals des Signalelements 25 geschaltet/betätigt. Eine Signalleitung 26 verbindet die Aktuatorkammerauswahl 16 mit dem Signalelement 25.

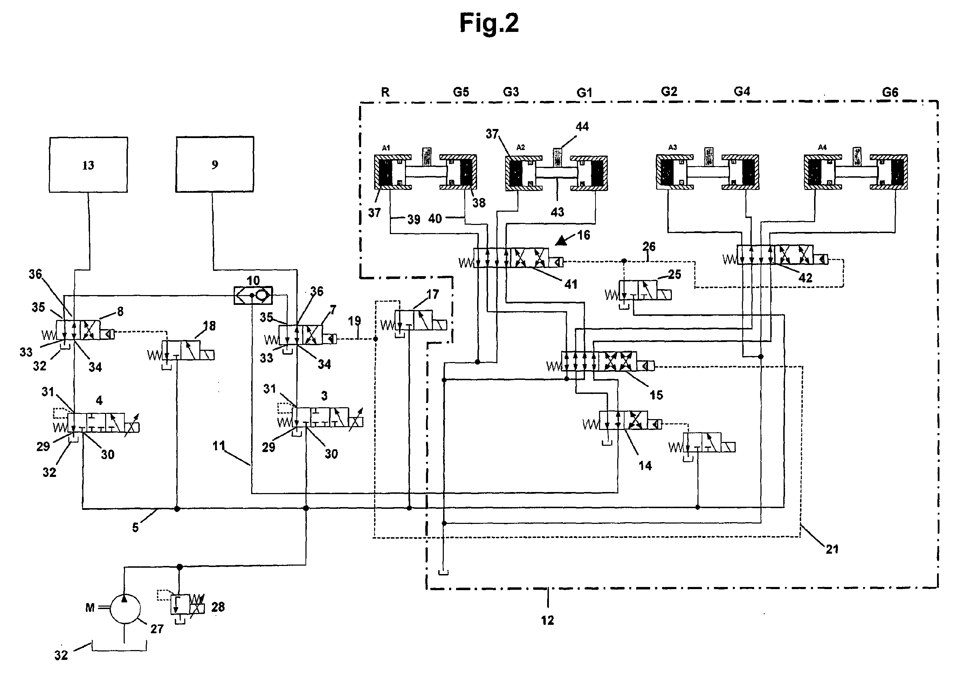

Figur 2 zeigt ein Blockschaltbild einer bevorzugten Umsetzung des Ausführungsbeispiels der Figur 1. Eine Pumpe 27 in Verbindung mit einem Hauptdruckregler 28 liefert den Betriebsdruck 6 (siehe Figur 1), der in der Sammelleitung 5 anliegt.

Die beiden Druckregler 3, 4 sind jeweils als 3/3-Wege-Ventile mit zwei Eingängen 29, 30 und einem Ausgang 31 ausgebildet. Der Eingang 29 ist dabei mit einem Ölsumpf 32 und der Eingang 30 mit der Sammelleitung 5 verbunden. Der Ausgang 31 jedes Druckreglers 3, 4 führt zu dem zugeordneten Umschaltventil 7, 8, das jeweils als 4/2-Wege-Ventil ausgebildet ist. Das 4/2-Wege-Ventil 7, 8 weist zwei Eingänge 33, 34 und zwei Ausgänge 35, 36 auf. Der Eingang 33 ist mit dem Ölsumpf 32 verbunden, während der Eingang 34 mit dem Ausgang 31 des zugehörigen Druckreglers 3, 4 verbunden ist. Der Ausgang 35 ist über den Druckumschalter 10 und die Leitung 11 mit dem Schaltsystem 12 verbunden. Der Ausgang 36 der Umschaltventile 7, 8 führt zu der Kupplung 9 bzw. zu der Kupplung 13.

Das Signalelement 17, hier als 3/2-Wege-Schaltventil ausgebildet, ist dem Umschaltventil 7 vorgeschaltet und schaltet den Betriebsdruck 6 der Sammelleitung 5 im elektrisch angeregten Zustand auf das Umschaltventil 7 durch, so dass dieses aus einer federbelasteten Ruhestellung, einer Stellung A_{I}, in die Stellung B_{I} geschaltet wird. Wie auch das Signalelement 17 ist das dem Umschaltventil 8 vorgeschaltete Signalelement 18 als 3/2-Wege-Schaltventil ausgebildet, das in Ruhestellung die Stellung A_{II} und bei Anliegen eines Signals oder Steuerdrucks die Stellung B_{II} einnimmt.

In dem in der Figur 2 dargestellten Zustand stellt das erste Umschaltventil 7 eine Verbindung zwischen dem ersten Druckregler 3 und der ersten Kupplung 9 her. Auch das zweite Umschaltventil 8 befindet sich in der Stellung A_{II}, bei der die zweite Kupplung 13 und der zweite Druckregler 4 miteinander verbunden sind. In diesen Stellungen A_{I}, A_{II} werden die beiden Kupplungen 9, 13 jeweils mit einem geregelten Druck beaufschlagt, so dass beide Kupplungen für eine gewisse Überschneidungsphase entsprechend der geregelten Drücke der Druckregler 3, 4 gleichzeitig ein Drehmoment übertragen können.

Das Schaltsystem 12 umfasst vier Aktuatoren A1, A2, A3, A4, die jeweils als doppelseitig ansteuerbare Schaltzylinder ausgebildet sind. Ein Schaltzylinder A1, A2, A3, A4 weist jeweils eine erste Kammer 37 und eine zweite Kammer 38 auf, die über eine Leitung 39, 40 mit der Aktuatorkammerauswahl 16 verbunden sind, die zwei 8/2-Wege-Schaltventile 41, 42 umfasst. Die beiden Schaltventile 41, 42 werden durch das Signalelement 25 in Form eines 3/2-Wege-Schaltventils über die Signalleitung 26 gemeinsam angesteuert.

Die in Figur 2 dargestellte Steuerungsvorrichtung 1 ist für die Steuerung eines Doppelkupplungsgetriebes mit sechs Vorwärtsgängen G1 bis G6 und einem Rückwärtsgang R ausgelegt. Dabei lässt sich mit Hilfe der Schaltzylinder A1, A2, A3 jeweils zwei Gänge einlegen, während durch den Schaltzylinder A4 der Gang G6 einlegbar ist. Wird beispielsweise die erste Kammer 37 des Schaltzylinders A2 mit Druck beaufschlagt, wird ein Doppelkolben 43 mit einer damit verbundenen Schaltgabel 44 (nur schematisch dargestellt) zu einer Seite gedrückt (in der Darstellung der Figur 2 nach rechts), wodurch der Gang G1 eingelegt wird.

Den Schaltventilen 41, 42 zur Auswahl der ersten oder zweiten Kammer ist die Gruppenwahl 15 vorgeschaltet, die entweder die Schaltzylinder A1, A2 oder die Schaltzylinder A3, A4 auswählt, so dass ein modellierter Druck über die Leitung 11 in eine der Kammern der dann ausgewählten Schaltzylinder gelangen kann. Zwischen der Gruppenauswahl 15, die ein 8/2-Wege-Schaltventil umfasst, und dem Druckumschalter 10 ist die Aktuatorauswahl 14 in Form eines 4/2-Wege-Schaltventils angeordnet. Das Schaltventil 14 wird über das Signalelement 23, hier ausgebildet als elektrisch betätigbares 3/2-Wege-Schaltventil, betätigt. Das Schaltventil 15 hingegen weist kein ihm zugeordnetes Signalelement auf, da es über die Signalleitung 19 und 21 mit dem Signalelement 17 verbunden ist.

Die Schaltzylinder A1, A2 mit den Gängen R, G5, G3, G1 sind dem ersten Teilgetriebe zugeordnet, das über die erste Kupplung 9 mit der hier nicht dargestellten Antriebseinheit verbunden werden kann. Entsprechend gehören die Schaltzylinder A3, A4 mit den Gängen G2, G4, G6 zu dem zweiten Teilgetriebe, das der zweiten Kupplung 13 zugeordnet ist.

Wird beispielsweise das Signalelement 17 elektrisch betätigt, wird ein Signal oder Steuerdruck über die Signalleitung 19 auf das erste Umschaltventil 7 geschaltet, wodurch dieses gegen die Federkraft in die Stellung B_{I} gedrückt wird. In dieser Stellung B_{I} ist die erste Kupplung 9 von dem Druckregler getrennt und das in dem zugehörigen Kupplungszylinder unter Druck stehende Druckmedium (Öl) wird über den Ausllass 35 und Einlass 33 des ersten Umschaltventils 7 zum Ölsumpf 32 geleitet. Als Folge lässt der Druck im Kupplungszylinder nach und die Kupplung öffnet sich. An dem zugehörigen ersten Teilgetriebe mit den Gängen R, G1, G2 und G3 liegt kein Drehmoment mehr an. Befindet sich das zweite Umschaltventil 7 in der in Fig. 2 dargestellten Stellung (Stellung A_{II}), wird die zweite Kupplung 13 durch den Druck des Druckreglers 4 beaufschlagt, so dass die Kupplung 13 ein Drehmoment zwischen Motor und dem ihr zugeordneten zweiten Teilgetriebe mit den Gängen G2, G4 und G6 übertragen kann.

Das Signal oder der Steuerdruck des Schaltventils 17 wird über die Leitung 21 auch zur Gruppenauswahl 15 geleitet und bewirkt, dass die Schaltzylinder A1 und A2 ausgewählt werden beziehungsweise dass eine Verbindung zwischen diesen Schaltzylindern und dem Druckumschalter 10 hergestellt wird. In der Stellung B_{II} des ersten Umschaltventils 7 wird der geregelte Druck des ersten Druckreglers 3 auf den Druckumschalter 10 gegeben, der, zumindest wenn sich das zweite Umschaltventil in der in Fig. 2 gezeigten Stellung Aₗₗ befindet, den Weg zum Schaltsystem 12 freigibt. Aufgrund des anliegenden Signals des Schaltventils 17 wählt die Gruppenauswahl die Schaltzylinder A1, A2 aus, so dass über entsprechende Stellung der Aktuatorauswahl 14 und der Kammerauswahl 16 ein Gang G1, G3, G5 oder R des nun lastfreien ersten Teilgetriebes eingelegt werden kann. Die gemeinsame Ansteuerung des ersten Umschaltventils 7 und der Gruppenauswahl 14 verhindert, dass Gänge in einem Teilgetriebe unter Last geschaltet werden.

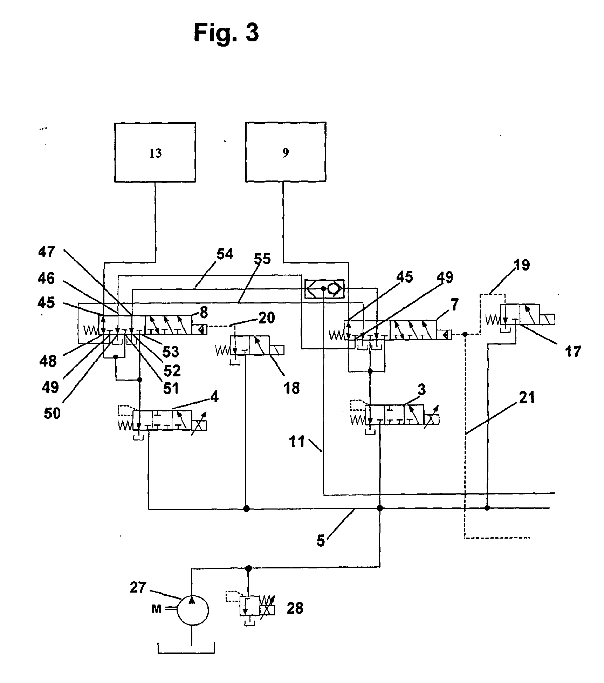

Fig. 3 zeigt einen Teil eines Blockschaltbilds, das gegenüber dem Ausführungsbeispiel der Fig. 2 modifiziert ist. Das Schaltsystem 12 ist in Fig. 3 nicht dargestellt. Das Ausführungsbeispiel der Fig. 2 unterscheidet sich in den verwendeten Umschaltventilen 7, 8 und der Schaltung zwischen diesen Ventilen, dem Druckumschalter 10 und den beiden Kupplungen 7, 8.

Das erste Umschaltventil 7 und auch der zweite Umschaltventil 8 sind im Ausführungsbeispiel der Fig. 2 als baugleiche 9/2-Wege-Schaltventil mit drei Ausgängen 45, 46, 47 und mit sechs Eingängen 48 bis 53 ausgebildet. In der Stellung Aₗₗ (in Fig. 3 dargestellt) stellt das Umschaltventil 8 über den Eingang 48 und den Ausgang 45 eine Verbindung zwischen dem zweiten Druckregler 4 und der zweiten Kupplung 13 her. In der anderen Stellung B_{II} sind über den Eingang 53 und den Ausgang 48 der zweite Druckregler 3 und der Druckumschalter 10 miteinander verbunden, sodass die Möglichkeit der Druckregelung zum Schalten der Gänge besteht. Gleichzeitig wird über den Eingang 51 und den Ausgang 46 eine Verbindung zwischen dem zweiten Druckregler 4 und einer Leitung 54 hergestellt, die zu dem ersten Umschaltventil 7 führt. Die Leitung 54 ist an dem Eingang 49 des ersten Umschaltventils 7 angeschlossen und ermöglicht über dessen Ausgang 45, dass in der Stellung B_{I} des ersten Umschaltventils 7 eine Druckbeaufschlagung der ersten Kupplung 9 durch den zweiten Druckregler 4 erfolgt.

Entsprechend ist eine weitere die beiden Umschaltventile 7, 8 verbindende Leitung 55 vorgesehen, durch die sich die zweite Kupplung 13 mit dem ersten Druckregler 3 betätigen lässt, wenn die beiden Umschaltventile jeweils die Stellung B_{I}, B_{II} einnehmen. Durch diese Schaltung ist es auch bei Ausfall eines Druckreglers möglich, alle Gänge des Doppelkupplungsgetriebes weiterhin zu nutzen.

Um die Zeitdauer zum Schalten eines Ganges zu verkürzen, kann in einer Endphase, in der beispielsweise mittels des ersten Druckregler 3 in der Stellung B_{I} des ersten Umschaltventils 7 ein Gang eingelegt wird, der Sollwert für den zu regelnden Druck auf ein Wert gesetzt werden, der für das anschließende Betätigen der (noch) offenen ersten Kupplung 9 benötigt wird. Schaltet nach erfolgtem Gangeinlegen das erste Umschaltventil in die Stellung A_{I}, liegt augenblicklich der an der ersten Kupplung der erforderliche, zuvor eingestellte Druckwert an.

### Bezugszeichenliste

- 1: Steuerungsvorrichtung
- 2: Regelungseinheit
- 3: Erster Druckregler
- 4: Zweiter Druckregler
- 5: Sammelleitung
- 6: Betriebsdruck
- 7: Erstes Umschaltventil
- 8: Zweites Umschaltventil
- 9: Erste Kupplung
- 10: Umschalter
- 11: Leitung
- 12: Schaltsystem
- 13: Zweite Kupplung
- 14: Aktuatorauswahl
- 15: Gruppenauswahl
- 16: Aktuator-Kammerauswahl
- 17: Signalelement
- 18: Signalelement
- 19: Signalleitung
- 20: Signalleitung
- 21: Signalleitung
- 22: Signalleitung
- 23: Signalelement
- 24: Signalleitung
- 25: Signalelement
- 26: Signalleitung
- 27: Pumpe
- 28: Hauptdruckregler
- 29: Eingang
- 30: Eingang
- 31: Ausgang
- 32: Ölsumpf
- 33: Eingang
- 34: Eingang
- 35: Ausgang
- 36: Ausgang
- 37: Erste Kammer
- 38: Zweite Kammer
- 39: Leitung
- 40: Leitung
- 41: 8/2-Wege-Schaltventil
- 42: 8/2-Wege-Schaltventil
- 43: Doppelkolben
- 44: Schaltgabel
- 45: Ausgang
- 46: Ausgang
- 47: Ausgang
- 48: Eingang
- 49: Eingang
- 50: Eingang
- 51: Eingang
- 52: Eingang
- 53: Eingang
- 54: Leitung
- 55: Leitung
- A1, A2, A3, A4: Aktuator
- R, G1 bis G6: Gang

## Patentansprüche

1. Hydraulische Steuerungsvorrichtung (1) für ein automatisiertes Doppelkupplungsgetriebe, das eine erste Kupplung (9) mit einem ersten Teilgetriebe und eine zweite Kupplung (13) mit einem zweiten Teilgetriebe sowie ein Schaltsystem (12) zum Ein-/Auslegen von Gängen der zwei Teilgetriebe aufweist, mit einer Regelungseinheit (2), die wenigstens einen regelbaren Druck und/oder einen regelbaren Volumenstrom für die Betätigung der ersten und zweiten Kupplung (9, 13) und für die Betätigung des Schaltsystems (12) vorgibt, und mit einer Umschaltvorrichtung, die zwischen der Regelungseinheit (2) und den Kupplungen (9, 13) beziehungsweise dem Schaltsystem (12) angeordnet ist und durch die der regelbare Druck beziehungsweise der regelbare Volumenstrom auf die Kupplungen (9, 13) oder das Schaltsystem (12) schaltbar ist, wobei die Regelungseinheit (2) ein erstes Regelventil (3) und ein zweites Regelventil (4) und die Umschalteinrichtung ein erstes Umschaltventil (7) und ein zweites Umschaltventil (8) aufweisen, **dadurch gekennzeichnet, dass**
- das erste Umschaltventil (7)
a) in einer Stellung A_{I} das erste Regelventil (3) mit der ersten Kupplung (9) verbindet und von dem Schaltsystem (12) trennt und
b) in einer Stellung B_{I} das erste Regelventil (3) mit dem Schaltsystem (12) verbindet und von der ersten Kupplung (9) trennt; und
- das zweite Umschaltventil (8)
c) in einer Stellung A_{I} das zweite Regelventil (4) mit der zweiten Kupplung (13) verbindet und von dem Schaltsystem (12) trennt und,
d) in einer Stellung B_{II} das zweite Regelventil (4) mit dem Schaltsystem (12) verbindet und von der zweiten Kupplung (13) trennt.

2. Steuerungsvorrichtung (1) nach Anspruch 1, **dadurch gekennzeichnet, dass** zwischen dem ersten Umschaltventil (7) beziehungsweise dem zweiten Umschaltventil (8) und dem Schaltsystem (12) ein Umschalter (10) vorgesehen ist, der sicherstellt, dass das Schaltsystem (12) entweder mit dem Druck/Volumenstrom des ersten Regelventils (7) oder mit dem Druck/Volumenstrom des zweiten Regelventils (8) beaufschlagt wird.

3. Steuerungsvorrichtung (1) nach Anspruch 2, **dadurch gekennzeichnet, dass** der Umschalter als Wechselventil (10) ausgebildet ist.

4. Steuerungsvorrichtung (1) nach einem der Ansprüche 1 bis 3, **dadurch gekennzeichnet, dass** in der Stellung B_{I} des ersten Umschaltventils (7) und bei Stellung B_{II} des zweiten Umschaltventils (8) eine Verbindung zwischen dem ersten Regelventil (3) und der zweiten Kupplung (13) und eine Verbindung zwischen dem zweiten Regelventil (4) und der ersten Kupplung (9) hergestellt ist.

5. Steuerungsvorrichtung (1) nach einem der Ansprüche 1 bis 4, **dadurch gekennzeichnet, dass** eine Gruppenauswahl (15) vorgesehen ist, durch die die Regelungseinheit (2) entweder mit einer ersten, dem ersten Teilgetriebe zugeordneten Gruppe von Aktuatoren (A1, A2) oder mit einer zweiten, dem zweiten Teilgetriebe zugeordneten Gruppe von Aktuatoren (A3, A4) verbunden wird.

6. Steuerungsvorrichtung (1) nach einem der Ansprüche 1 bis 5, d**adurch gekennzeichnet, dass** eine Aktuatorauswahl (14) vorgesehen ist, durch die die Regelungseinheit (2) mit einem der Aktuatoren (A1, A2, A3, A4) der ersten oder zweiten Gruppe von verbunden wird.

7. Steuerungsvorrichtung (1) nach einem der Ansprüche 1 bis 7, **dadurch gekennzeichnet, dass** eine Kammerauswahl (16) vorgesehen ist, durch die die Regelungseinheit entweder mit einer ersten Kammer (37) oder mit einer zweiten Kammer (38) eines Aktuators (A1, A2, A3, A4) verbunden wird.

8. Steuerungsvorrichtung (1) nach Anspruch 7, **dadurch gekennzeichnet, dass** die Gruppenauswahl (15), die Aktuatorauswahl (14) und die Kammerauswahl (16) in Reihe geschaltet sind.

9. Steuerungsvorrichtung (1) nach einem der Ansprüche 5 bis 8, **dadurch gekennzeichnet, dass** die Gruppenauswahl (15) durch ein Signal angesteuert wird, das zur Ansteuerung wenigstens eines der beiden Umschaltventile (7, 8) dient.

10. Verfahren zum Steuern eines Doppelkupplungsgetriebes mit einer Steuerungsvorrichtung (1) nach einem Ansprüche 1 bis 9, **dadurch gekennzeichnet, dass** vor dem Umschalten von Stellung B_{I}, B_{II} auf Stellung A_{,} A_{II} des ersten oder des zweiten Umschaltventils (7, 8) der Druck des Regelventils (3, 4) auf einen Wert eingestellt wird, der von der nachfolgenden Ansteuerung der Kupplung (9, 13) abhängt, die nach Umschalten auf die Stellung A_{I} A_{II} des Umschaltventils (7, 8) mit dem Druck des Regelventils (3, 4) beaufschlagt wird.

11. Verfahren nach Anspruch 10, **dadurch gekennzeichnet, dass** vor dem Umschalten von Stellung A_{I}, A_{II} auf B_{I,} B_{II}, des ersten oder zweiten Umschaltventils (7, 8) die erste oder zweite Kupplung (9, 13) über eine Reduzierung des Drucks des Regelventils (3, 4) geöffnet wird.

## Claims

1. Hydraulic control apparatus (1) for an automatic dual clutch transmission, which includes first clutch (9) with a first partial transmission and a second clutch (13) with a second partial transmission, as well as a shifting system (12) for engaging/releasing gears of the two partial transmissions, having a control unit (2) which predetermines at least one controllable pressure and/or at least one controllable volumetric flow for the actuation of the first and second clutches (9, 13) and for the actuation of the shifting system (12), and having a switching apparatus, which is arranged between the control unit (2) and the clutches (9, 13) or the shifting system (12) and can be used to switch the controllable pressure or the controllable volumetric flow between the clutches (9, 13) or the shifting system (12), the control unit (2) having a first control valve (3) and a second control valve (4), and the switching device having a first switching valve (7) and a second switching valve (8), **characterized in that**
- the first switching valve (7)
a) in a first position A_{I} connects the first control valve (3) to the first clutch (9) and disconnects it from the shifting system (12), and
b) in a position B_{I} connects the first control valve (3) to the shifting system (12) and disconnects it from the first clutch (9); and
- the second switching valve (8)
c) in a position A_{II} connects the second control valve (4) to the second clutch (13) and disconnects it from the shifting system (12), and
d) in a position B_{II} connects the second control valve (4) to the shifting system (12) and disconnects it from the second clutch (13).

2. Control apparatus (1) according to Claim 1, **characterized in that** a switching means (10) is provided between the first switching valve (7) and between the second switching valve (8) and the shifting system (12), which switching means (10) ensures that the shifting system (12) is acted on either by the pressure/volumetric flow of the first control valve (7) or by the pressure/volumetric flow of the second control valve (8).

3. Control apparatus (1) according to Claim 2, **characterized in that** the switching means is designed as a changeover valve (10).

4. Control apparatus (1) according to one of Claims 1 to 3, **characterized in that** in position B_{I} of the first switching valve (7) and at position B_{II} of the second switching valve (8) a connection is produced between the first control valve (3) and the second clutch (13) and a connection is produced between the second control valve (4) and the first clutch (9).

5. Control apparatus (1) according to one of Claims 1 to 4, **characterized in that** a group selector (15) is provided, by means of which the control unit (2) is connected either to a first group of actuators (A1, A2) assigned to the first partial transmission or to a second group of actuators (A3, A4) assigned to the second partial transmission.

6. Control apparatus (1) according to one of Claims 1 to 5, **characterized in that** an actuator selector (14) is provided, by which the control unit (2) is connected to one of the actuators (A1, A2, A3, A4) from the first or second group.

7. Control apparatus (1) according to one of Claims 1 to 7, **characterized in that** a chamber selector (16) is provided, by which the control unit is connected either to a first chamber (37) or to a second chamber (38) of an actuator (A1, A2, A3, A4).

8. Control apparatus (1) according to Claim 7, **characterized in that** the group selector (15), the actuator selector (14) and the chamber selector (16) are connected in series.

9. Control apparatus (1) according to one of Claims 5 to 8, **characterized in that** the group selector (15) is actuated by a signal which is used to actuate at least one of the two switching valves (7, 8).

10. Method for controlling a dual clutch transmission using the control apparatus (1) according to one of Claims 1 to 9, **characterized in that** prior to switching from position B_{I}, B_{II} to position A_{I}, A_{II} of the first or second switching valves (7, 8), the pressure of the control valve (3, 4) is set to a value which depends on the subsequent actuation of the clutch (9, 13) which is acted on by the pressure of the control valve (3, 4) after the switching valve (7, 8) has been switched to position A_{I}, A_{II}·

11. Method according to Claim 10, **characterized in that** prior to switching from position A_{I}, A_{II} to B_{I}, B_{II} of the first or second switching valve (7, 8), the first or second clutch (9, 13) is opened by reducing the pressure of the control valve (3, 4).

## Revendications

1. Dispositif de commande hydraulique (1) pour une boîte de vitesses à double accouplement robotisée qui présente un premier accouplement (9) avec une première boîte de vitesses partielle et un deuxième accouplement (13) avec une deuxième boîte de vitesses partielle ainsi qu'un système de changement de vitesse (12) pour engager/dégager des rapports des deux boîtes de vitesses partielles, comprenant une unité de régulation (2) qui prédéfinit au moins une pression réglable et/ou un débit volumique réglable pour l'actionnement du premier et du deuxième accouplement (9, 13) et pour l'actionnement du système de changement de vitesse (12), et comprenant un dispositif d'inversion qui est disposé entre l'unité de régulation (2) et les accouplements (9, 13) ou le système de changement de vitesse (12) et par le biais duquel la pression réglable ou le débit volumique réglable peut être appliqué sur les accouplements (9, 13) ou sur le système de changement de vitesse (12), l'unité de régulation (2) présentant une première vanne de régulation (3) et une deuxième vanne de régulation (4) et le dispositif d'inversion présentant une première vanne d'inversion (7) et une deuxième vanne d'inversion (8), **caractérisé en ce que**
- la première vanne d'inversion (7)
a) dans une position A_{I}, relie la première vanne de régulation (3) avec le premier accouplement (9) et l'isole du système de changement de vitesse (12) et
b) dans une position B_{I}, relie la première vanne de régulation (3) avec le système de changement de vitesse (12) et l'isole du premier accouplement (9) et
- la deuxième vanne d'inversion (8)
c) dans une position A_{II}, relie la deuxième vanne de régulation (4) avec le deuxième accouplement (13) et l'isole du système de changement de vitesse (12) et
d) dans une position B_{II}, relie la deuxième vanne de régulation (4) avec le système de changement de vitesse (12) et l'isole du deuxième accouplement (13).

2. Dispositif de commande (1) selon la revendication 1, **caractérisé en ce qu'**entre la première vanne d'inversion (7) ou la deuxième vanne d'inversion (8) et le système de changement de vitesse (12) est prévu un inverseur (10) qui garantit que le système de changement de vitesse (12) est exposé soit à la pression / au débit volumique de la première vanne de régulation (7), soit à la pression / au débit volumique de la deuxième vanne de régulation (8).

3. Dispositif de commande (1) selon la revendication 2, **caractérisé en ce que** l'inverseur est réalisé sous la forme d'un sélecteur de circuit (10).

4. Dispositif de commande (1) selon l'une des revendications 1 à 3, **caractérisé en ce que** dans la position B_{I} de la première vanne d'inversion (7) et dans la position B_{II} de la deuxième vanne d'inversion (8), une liaison est établie entre la première vanne de régulation (3) et le deuxième accouplement (13) et une liaison est établie entre la deuxième vanne de régulation (4) et le premier accouplement (9).

5. Dispositif de commande (1) selon l'une des revendications 1 à 4, **caractérisé en ce qu'**il est prévu un dispositif de sélection de groupe (15) par le biais duquel l'unité de régulation (2) est reliée soit avec un premier groupe d'actionneurs (A1, A2) affecté à la première boîte de vitesses partielle, soit avec un deuxième groupe d'actionneurs (A3, A4) affecté à la deuxième boîte de vitesses partielle.

6. Dispositif de commande (1) selon l'une des revendications 1 à 5, **caractérisé en ce qu'**il est prévu un dispositif de sélection d'actionneur (14) par le biais duquel l'unité de régulation (2) est reliée avec l'un des actionneurs (A1, A2, A3, A4) du premier ou du deuxième groupe.

7. Dispositif de commande (1) selon l'une des revendications 1 à 7, **caractérisé en ce qu'**il est prévu un dispositif de sélection de chambre (16) par le biais duquel l'unité de régulation est reliée soit avec une première chambre (37), soit avec une deuxième chambre (38) d'un actionneur (A1, A2, A3, A4).

8. Dispositif de commande (1) selon la revendication 7, **caractérisé en ce que** le dispositif de sélection de groupe (15), le dispositif de sélection d'actionneur (14) et le dispositif de sélection de chambre (16) sont branchés en série.

9. Dispositif de commande (1) selon l'une des revendications 5 à 8, **caractérisé en ce que** le dispositif de sélection de groupe (15) est commandé par un signal qui sert à commander au moins l'une des deux vannes d'inversion (7, 8).

10. Procédé pour commander une boîte de vitesses à double accouplement avec dispositif de commande (1) selon l'une des revendications 1 à 9, **caractérisé en ce qu'**avant le basculement de la position B_{I}, B_{II} vers la position A_{I}, A_{II} de la première ou de la deuxième vanne d'inversion (7, 8), la pression de la vanne de régulation (3, 4) est réglée à une valeur qui dépend de la commande à suivre de l'accouplement (9, 13) qui sera soumis à la pression de la vanne de régulation (3, 4) après le basculement de la vanne d'inversion (7, 8) en position A_{I}, A_{II}.

11. Procédé selon la revendication 10, **caractérisé en ce qu'**avant le basculement de la position A_{I}, A_{II} vers B_{I}, B_{II} de la première ou de la deuxième vanne d'inversion (7, 8), le premier ou le deuxième accouplement (9, 13) est ouvert par une réduction de la pression de la vanne de régulation (3, 4).
